# EUROPEAN PATENT SPECIFICATION

(11) **EP 2 873 286 B1**
(45) Date of publication and mention of the grant of the patent: **30.12.2020**
(21) Application number: 13816498.3
(22) Date of filing: 05.07.2013
(51) Int. Cl.: H04W 24/02, H04W 92/20, H04W 92/12, H04W 84/04

(54) **APPARATUS AND METHOD FOR CONFIGURING WIRELESS BACK HAUL LINK IN WIRELESS COMMUNICATION SYSTEM**
VORRICHTUNG UND VERFAHREN ZUR KONFIGURATION VON DRAHTLOSEN BACKHAUL-VERBINDUNGEN IN EINEM DRAHTLOSEN KOMMUNIKATIONSSYSTEM
APPAREIL ET PROCÉDÉ POUR CONFIGURER UNE LIAISON TERRESTRE SANS FIL DANS UN SYSTÈME DE COMMUNICATION SANS FIL

(30) Priority: 11.07.2012 KR 20120075330
(43) Date of publication of application: 20.05.2015
(73) Proprietor: Samsung Electronics Co., Ltd., Suwon-si, Gyeonggi-do 443-742 (KR)
(72) Inventor: PARK, Jeong-Ho, Gyeonggi-do 443-742 (KR); KIM, Tae-Young, Gyeonggi-do 443-742 (KR); YU, Hyun-Kyu, Gyeonggi-do 443-742 (KR); JEONG, Su-Ryong, Gyeonggi-do 443-742 (KR)
(74) Representative: Nederlandsch Octrooibureau
(86) International application number: PCT/KR2013/005989
(87) International publication number: WO 2014/010881

(56) References cited:
- EP-A1- 2 083 595
- WO-A1-2010/130268
- WO-A1-2012/042311
- US-A1- 2010 291 929
- US-A1- 2011 039 558
- US-A1- 2011 294 508
- US-A1- 2012 014 286
- NOKIA SIEMENS NETWORKS ET AL: "R3-080376 SON Use Case: Cell Phy_ID Automated Configuration", 3RD GENERATION PARTNERSHIP PROJECT (3GPP); TECHNICALSPECIFICATION GROUP (TSG) RADIO ACCESS NETWORK (RAN); WORKINGGROUP 3 (WG3), XX, XX , no. R3-080376 11 February 2008 (2008-02-11), pages 1-3, XP002597884, Retrieved from the Internet: URL:http://webcache.googleusercontent.com/ search?q=cache:R6H9aoXPiwIJ:www.quintillio n.co.jp/3GPP/TSG_RAN/TSG_RAN2008/TSG_RAN_W G3_Iu2.html+r3-080376&cd=1&hl=nl&ct=clnk&g l=nl [retrieved on 2010-08-23]

## Description

### Technical Field

The present disclosure relates to configuring a wireless back haul link in a wireless communication system.

### Background Art

A wireless communication system has evolved to provide various high-speed large-capacity services to Mobile Stations (MSs). Examples of the wireless communication system include a High Speed Downlink Packet Access (HSDPA) mobile communication system, a High Speed Uplink Packet Access (HSUPA) mobile communication system, a Long-Term Evolution (LTE) mobile communication system, a LTE-Advanced (LTE-A) mobile communication system, a High Rate Packet Data (HRPD) mobile communication system proposed in a 3rd Generation Project Partnership 2 (3GPP2), and an Institute of Electrical and Electronics Engineers (IEEE) 802.16m mobile communication system.

That is, the wireless communication system has evolved to increase data rate for satisfying a data traffic need, so the wireless communication system actively considers using a super high frequency-ultra wideband scheme in which a super high frequency is used at an ultra wide band in order to increase the data rate. However, the super high frequency-ultra wideband scheme increases propagation loss, the propagation loss results in decreasing a propagation distance, so a service coverage of a Base Station (BS) is decreased.

Meanwhile, a beam forming scheme is a typical scheme in which the wireless communication system decreases propagation loss, so the wireless communication system uses the super high frequency-ultra wideband scheme and the beam forming scheme to increase a service coverage of a BS. Even if the wireless communication system uses the super high frequency-ultra wideband scheme and the beam forming scheme, data traffic increase in the wireless communication system results in an additional BS deployment. Recently, even if a service coverage is decreased according to the data traffic increase and system request, a need for a BS of which a size is small increases, so an additional BS deployment is resulted.

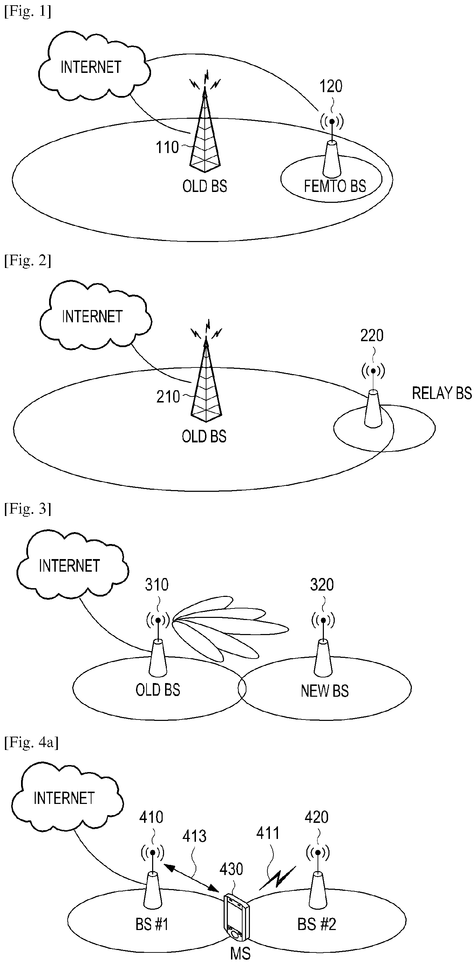

If a BS is additionally deployed in a wireless communication system, a link between a new BS and an old BS should be configured, a method for configuring the link between the new BS and the old BS in the wireless communication system will be described with reference to FIGs. 1 to 3.

FIG. 1 schematically illustrates a process for configuring a link between an old BS and a femto BS in a case that the femto BS is newly deployed as a new BS in a conventional wireless communication system.

Referring to FIG. 1, the wireless communication system includes an old BS 110 and a femto BS 120. If the femto BS 120 is newly deployed as a new BS in a situation in which the old BS 110 has been deployed in the wireless communication system, a Mobile Station (MS) may recognize that the femto BS 120 is newly deployed. After recognizing the newly deployed femto BS 120, the MS notifies the old BS 110 that the femto BS 120 is deployed, so the old BS 110 may recognize that the femto BS 120 is newly deployed.

FIG. 2 schematically illustrates a process for configuring a link between an old BS and a relay BS in a case that the relay BS is newly deployed as a new BS in a conventional wireless communication system.

Referring to FIG. 2, the wireless communication system includes an old BS 210 and a relay BS 220. If the relay BS 220 is newly deployed as a new BS in a situation in which the old BS 210 has been deployed in the wireless communication system, the relay BS 220 configures a link with the old BS 210 by performing an initial network entry procedure like an MS (not shown in FIG. 2).

FIG. 3 schematically illustrates a process for configuring a link between an old BS and a new BS in a case that the new BS is deployed in a conventional wireless communication system.

Referring to FIG. 3, the wireless communication system includes an old BS 310 and a new BS 320. If the new BS 320 is newly deployed in a situation in which the old BS 310 has been deployed, the wireless communication system configures a link between the old BS 310 and the new BS 320 by allocating a dedicated resource between the old BS 310 and the new BS 320. That is, the old BS 310 performs a signaling using a dedicated resource for configuring a back haul link between the old BS 310 and the new BS 320 as well as a signaling provided through an air link.

The link configuration method among BSs described in FIGs. 1 to 3 has following problems.

Firstly, in the link configuration method among BSs described in FIG. 1, if the femto BS 120 is newly deployed in a wireless communication system, there is a limitation in which the femto BS 120 should be connected to the old BS 110 through a wired back haul link.

Secondly, in the link configuration method among BSs described in FIG. 2, the relay BS 220 should be deployed within a service coverage of the old BS 210. So, a link coverage between the old BS 210 and the relay BS 220 may not exceed a link coverage between the old BS 210 and an MS.

Thirdly, in the link configuration method among BSs described in FIG. 3, a signaling should be always performed for configuring a back haul link among BSs using a dedicated resource, so severe waste for power, frequencies, etc. is resulted and a service quality is severely decreased.

The above information is presented as background information only to assist with an understanding of the present disclosure. No determination has been made, and no assertion is made, as to whether any of the above might be applicable as prior art with regard to the present disclosure.

EP 2083595 relates to a method and apparatuses for selecting a cell identifier in a cellular network, wherein a predetermined information indicating a search phase for the cell identifier is broadcast from a cell. At least one cell identifier of respective neighbouring cells is determined and reported to the cell in response to a receipt of the predetermined information. The cell identifier is then set for the cell based on the reported at least one cell identifier Thereby, cell identity setting and neighbour relations establishment can be automated at low signaling load and the need of manual planning can be reduced.

NOKIA SIEMENS NETWORKS ET AL: "R3-080376 SON Use Case: Cell Phy_ID Automated Configuration", 3RD GENERATION PARTNERSHIP PROJECT (3GPP); TECHNICALSPECIFICATION GROUP (TSG) RADIO ACCESS NETWORK (RAN); WORKINGGROUP 3 (WG3), XX, XX no. R3-080376 11 February 2008 (2008-02-11), pages 1-3, XP002597884 relates to an automated configuration of a newly introduced cell's physical ID.

### Disclosure of Invention

### Technical Problem

To address the above-discussed deficiencies of the prior art, an aspect of the present invention is to provide a method by a mobile station, a method by a first base station, a method by a second base station and corresponding mobile station, first base station and second base station for configuring a wireless back haul link in a wireless communication system.

Another aspect of the present disclosure is to provide a method by a mobile station, a method by a first base station, a method by a second base station and corresponding mobile station, first base station and second base station for configuring a wireless back haul link in a region in which a wired back haul link may not be provided in a wireless communication system.

Another aspect of the present disclosure is to provide a method by a mobile station, a method by a first base station, a method by a second base station and corresponding mobile station, first base station and second base station for configuring a wireless back haul link without limiting link coverage among Base Stations (BSs) in a wireless communication system.

Another aspect of the present disclosure is to provide a method by a mobile station, a method by a first base station, a method by a second base station and corresponding mobile station, first base station and second base station for configuring a wireless back haul link using a dedicated resource as necessary in a wireless communication system.

### Solution to Problem

The present invention is defined by the subject-matter of the independent claims.

Preferred embodiments are set out in the dependent claims.

There is provided a method for configuring a wireless backhaul link by a Mobile Station (MS) in a wireless communication system, the method comprising: acquiring System Information (SI) for each of an old Base Station (BS) which transmits a first code and a new BS which transmits a second code; transmitting a message which reports the SI for the new BS to the old BS; and receiving a message indicating that the new BS discards the second code and uses the first code from the old BS, wherein the first code is a code indicating that a related BS is a BS which has been already deployed, and wherein the second code is a code indicating that a related BS is a BS which is newly deployed.

There is provided a method for configuring a wireless backhaul link by an old Base Station (BS) in a wireless communication system, the method comprising:
receiving System Information (SI) for a new BS which transmits a second code from a Mobile Station (MS);
performing a Front-Haul Link Configuration Procedure (FLCP) with the new BS;
transmitting a first code to the new BS after completing the FLCP; and transmitting a message indicating that the new BS discards the second code and uses the first code, wherein the first code is a code indicating that a related BS is a BS which has been already deployed, and wherein the second code is a code indicating that a related BS is a BS which is newly deployed.

In accordance with another aspect of the present disclosure, there is provided a method for configuring a wireless backhaul link by a new Base Station (BS) in a wireless communication system, the method comprising: performing a Front-Haul Link Configuration Procedure (FLCP) with an old BS; after completing the FLCP with the old BS, receiving a first code from the old BS; and discarding a second code which the new BS has already used and using the first code, wherein the first code is a code indicating that a related BS is a BS which has been already deployed, and wherein the second code is a code indicating that a related BS is a BS which is newly deployed.

There is provided a Mobile Station (MS) in a wireless communication system, the MS comprising: a transmitter; a receiver; and a controller, wherein the controller is configured to acquire System Information (SI) for each of an old Base Station (BS) which transmits a first code and a new BS which transmits a second code, wherein the transmitter is configured to transmit a message which reports the SI for the new BS to the old BS, wherein the receiver is configured to receive a message indicating that the new BS discards the second code and uses the first code from the old BS, wherein the first code is a code indicating that a related BS is a BS which has been already deployed, and wherein the second code is a code indicating that a related BS is a BS which is newly deployed.

There is provided an old Base Station (BS) in a wireless communication system, the old BS comprising: a receiver; a transmitter; and a controller, wherein the receiver is configured to receive System Information (SI) for a new BS which transmits a second code from a Mobile Station (MS), wherein the controller is configured to perform a Front-Haul Link Configuration Procedure (FLCP) with the new BS, wherein the transmitter is configured to transmit a first code to the new BS after completing the FLCP, and transmits a message indicating that the new BS discards the second code and uses the first code, wherein the first code is a code indicating that a related BS is a BS which has been already deployed, and wherein the second code is a code indicating that a related BS is a BS which is newly deployed.

There is provided a new Base Station (BS) in a wireless communication system, the new BS comprising: a transmitter; a receiver; and a controller, wherein the controller is configured to perform a Front-Haul Link Configuration Procedure (FLCP) with an old BS, wherein the receiver is configured to receive a first code from the old BS after the FLCP with the old BS is completed, wherein the controller is configured to discard a second code which the new BS has already used and uses the first code, wherein the first code is a code indicating that a related BS is a BS which has been already deployed, and wherein the second code is a code indicating that a related BS is a BS which is newly deployed.

Other aspects, advantages, and salient features of the disclosure will become apparent to those skilled in the art from the following detailed description, which, taken in conjunction with the annexed drawings, discloses certain embodiments of the disclosure.

Definitions for certain words and phrases are provided throughout this patent document, those of ordinary skill in the art should understand that in many, if not most instances, such definitions apply to prior, as well as future uses of such defined words and phrases.

### Advantageous Effects of Invention

As is apparent from the foregoing description, the present disclosure enables to automatically configure a wireless back haul link between an old BS and a new BS in a wireless communication system.

The present disclosure enables to configure a wireless back haul link between an old BS and a new BS in a region in which a wired back haul link may not be provided in a wireless communication system.

The present disclosure enables to configure a wireless back haul link between an old BS and a new BS without limiting link coverage among Base Stations (BSs) in a wireless communication system.

The present disclosure enables to configure a wireless back haul link between an old BS and a new BS using a dedicated resource as necessary in a wireless communication system.

### Brief Description of Drawings

For a more complete understanding of the present disclosure and its advantages, reference is now made to the following description taken in conjunction with the accompanying drawings, in which like reference numerals represent like parts:
FIG. 1 schematically illustrates a process for configuring a link between an old BS and a femto BS in a case that the femto BS is newly deployed as a new BS in a conventional wireless communication system;
FIG. 2 schematically illustrates a process for configuring a link between an old BS and a relay BS in a case that the relay BS is newly deployed as a new BS in a conventional wireless communication system;
FIG. 3 schematically illustrates a process for configuring a link between an old BS and a new BS in a case that the new BS is deployed in a conventional wireless communication system;
FIGs. 4a to 4d schematically illustrate a process for configuring a wireless back haul link between an old BS and a new BS in a case that the new BS is newly deployed in a wireless communication system according to embodiments of the present disclosure;
FIG. 5 schematically illustrates a process for configuring a wireless back haul link between an old BS and a new BS illustrated in FIGs. 4a to 4d;
FIG. 6 schematically illustrates an operation process of an MS 430 illustrated in FIG. 5;
FIG. 7 schematically illustrates an operation process of a BS # 1 410 illustrated in FIG. 5;
FIG. 8 schematically illustrates an operation process of a BS # 2 420 illustrated in FIG. 5;
FIG. 9 schematically illustrates an internal structure of an MS in a wireless communication system according to embodiments of the present disclosure;
FIG. 10 schematically illustrates an internal structure of an old BS in a wireless communication system according to embodiments of the present disclosure; and
FIG. 11 schematically illustrates an internal structure of a new BS in a wireless communication system according to embodiments of the present disclosure.

Throughout the drawings, like reference numerals will be understood to refer to like parts, components, and structures.

### [Mode for Invention]

FIGURES 1 through 11, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged BS or MS.

The following description with reference to the accompanying drawings is provided to assist in a comprehensive understanding of certain embodiments of the disclosure as defined by the claims. It includes various specific details to assist in that understanding but these are to be regarded as examples. Accordingly, those of ordinary skilled in the art will recognize that various changes and modifications of the embodiments described herein can be made without departing from the scope of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of certain embodiments of the present disclosure is provided for illustration purpose only and not for the purpose of limiting the disclosure as defined by the appended claims.

It is to be understood that the singular forms "a," "an," and "the" include plural references unless the context clearly dictates otherwise. Thus, for example, reference to "a component surface" includes reference to one or more of such surfaces.

The present disclosure provides an apparatus and method for configuring a wireless back haul link in a wireless communication system.

The present disclosure provides an apparatus and method for configuring a wireless back haul link in a region in which a wired back haul link may not be provided in a wireless communication system.

The present disclosure provides an apparatus and method for configuring a wireless back haul link without limiting link coverage among Base Stations (BSs) in a wireless communication system.

The present disclosure provides an apparatus and method for configuring a wireless back haul link using a dedicated resource as necessary in a wireless communication system.

An apparatus and method for configuring a wireless back haul link provided in the present disclosure may be applied to various mobile communication systems such as a High Speed Downlink Packet Access (HSDPA) mobile communication system, a High Speed Uplink Packet Access (HSUPA) mobile communication system, a Long-Term Evolution (LTE) mobile communication system, a LTE-Advanced (LTE-A) mobile communication system, a High Rate Packet Data (HRPD) mobile communication system proposed in a 3rd Generation Project Partnership 2 (3GPP2), and an Institute of Electrical and Electronics Engineers (IEEE) 802.16m mobile communication system.

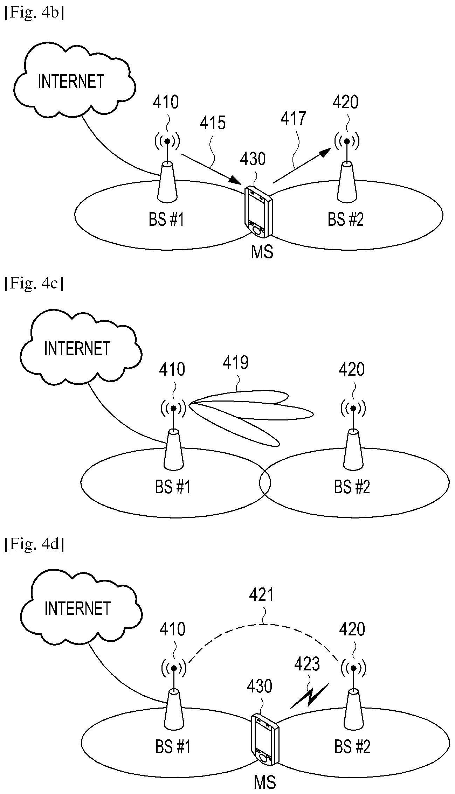

FIGs. 4a to 4d schematically illustrate a process for configuring a wireless back haul link between an old BS and a new BS in a case that the new BS is newly deployed in a wireless communication system according to embodiments of the present disclosure.

Referring to FIGs. 4a to 4d, the wireless communication system includes a BS # 1 410, a BS # 2 420, and a Mobile Station (MS) 430.

The MS 430 performs a scan operation for neighbor BSs. Upon detecting a preset Temporary code (Tcode), the MS 430 receives System Information (SI) from a BS which transmits the Tcode and stores the received SI (step 411). The Tcode is transmitted from only a newly deployed BS not a BS which has already been deployed. The MS 430 does not perform a random access operation with the BS which transmits the Tcode.

For example, it will be assumed that the SI includes location associated information of a related BS, and the location associated information includes a latitude, a longitude, an altitude, etc. In FIGs. 4a to 4d, the BS # 1 410 is an old BS, the BS # 2 420 is a new BS that is newly deployed, and the MS 430 maintains a connection with the BS # 1 410. The MS 430 transmits a new BS information report message including the SI received from the BS # 2 420 to the BS # 1 410 (step 413).

After receiving the new BS information report message from the MS 430, the BS # 1 410 detects that there is the new BS using the Tcode around the BS # 1 410, so the BS # 1 410 should perform a Front-Haul Link Configuration Procedure (FLCP) with the new BS, e.g., the BS # 2 420. The BS # 1 410 starts the FLCP with the BS # 2 420. The BS # 1 410 transmits an FLCP start code transmission request message requesting to transmit an FLCP start request code indicating an FLCP start command to the BS # 2 420 (step 415). The BS # 1 410 may transmit the FLCP start code transmission request message to only the MS 430, and the number of MSs which transmit the FLCP start code transmission request message is determined without limitation according to a need of the BS # 1 410. After receiving the FLCP start code transmission request message, the MS 430 transmits the FLCP start code to the BS # 2 420 in order that the BS # 2 420 starts performing the FLCP with the BS # 1 410 (step 417).

Steps 415 to 417 may be omitted, and the BS # 1 410 immediately starts performing the FLCP with the BS # 2 420 if the steps 415 to 417 are omitted.

The BS # 1 410 and the BS # 2 420 perform an FLCP during a preset time at a preset timing point (step 419). The FLCP may include a procedure in which the BS # 1 410 transmits a reference symbol for a front haul link to the BS # 2 420 and receives the reference symbol from the BS # 2 420.

After completing the FLCP, the BS # 2 420 configures a wireless back haul with the BS # 1 410, updates a system operating parameter used for an air link, discards a Tcode which the BS # 2 420 has used, and uses a code for a normal air operation, i.e., a Normal code (Ncode) (step 421). If the BS # 2 420 uses the Ncode, the MS 430 may perform a normal operation with the BS 2 # 420 according to a need of the BS # 2 420 (step 423).

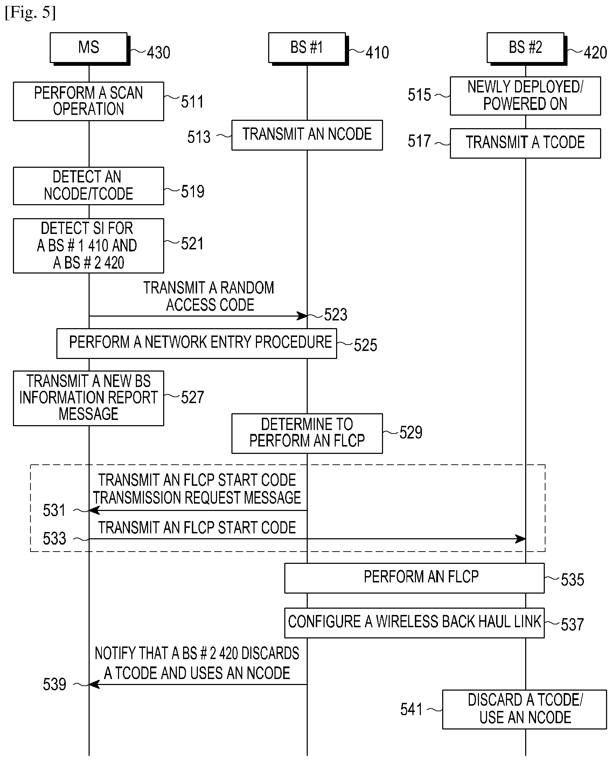

FIG. 5 schematically illustrates a process for configuring a wireless back haul link between an old BS and a new BS illustrated in FIGs. 4a to 4d.

Referring to FIG. 5, a wireless communication system includes a BS # 1 410, a BS # 2 420, and an MS 430. The MS 430 performs a scan operation for neighbor BSs (step 511). The BS # 1 410 transmits an Ncode (step 513). The BS # 2 420 is newly deployed and powered on (step 515) and transmits a Tcode (step 517). The MS 430 detects an Ncode and a Tcode after performing the scan operation for the neighbor BSs (step 519) and SI for BSs which transmit the Ncode and the Tcode (step 521). The MS 430 detects SI for the BS # 1 410 which transmits the Ncode and SI for the BS # 2 420 which transmits the Tcode.

The MS 430 transmits a random access code to the BS # 1 410 through a random access channel (RACH) (step 523), and performs a network entry procedure with the BS # 1 410 (step 525). After performing the network entry procedure with the BS # 1 410, the MS 430 transmits a new BS information report message to the BS # 1 410 (step 527). In FIG. 5, after performing the network entry procedure, the MS 430 transmits the new BS information report message to the BS # 1 410, however, it will be understood by those of ordinary skill in the art that the new BS information report message may be transmitted to the BS # 1 410 during the network entry procedure.

After receiving the new BS information report message from the MS 430, the BS # 1 410 detects that there is a new BS which is newly deployed around the BS # 1 410, so the BS # 1 410 determines to perform an FLCP with the new BS, i.e., the BS # 2 420 (step 529). After determining to perform the FLCP with the BS # 2 420, the BS # 1 410 transmits an FLCP start code transmission request message to the MS 430 and MSs which are connected to the BS # 1 410 (step 531). After receiving the FLCP start code transmission request message, the MS 430 transmits an FLCP start code to the BS # 2 420 (step 533).

Steps 531 to 533 may be omitted, and the BS # 1 410 immediately starts performing the FLCP with the BS # 2 420 if the steps 531 to 533 are omitted.

The BS # 1 410 and the BS # 2 420 perform an FLCP during a preset time at a preset timing point (step 535). The FLCP may include a procedure in which the BS # 1 410 transmits a reference symbol for a front haul link to the BS # 2 420 and receives the reference symbol from the BS # 2 420.

After the FLCP is completed, a wireless back haul link is configured between the BS # 1 410 and the BS # 2 420 (step 537). The BS # 2 420 receives an Ncode from the BS # 1 410 through the wireless back haul link. After the wireless back haul link is configured, the BS # 1 410 notifies the MS 430 that a Tcode used in the BS # 2 420 is discarded and an Ncode is used (step 539). After the wireless back haul link is configured, the BS # 2 420 updates a system operating parameter used in an air link, discards the Tcode which the BS # 2 420 has used, and uses a code for a normal air operation, i.e., an Ncode (step 541).

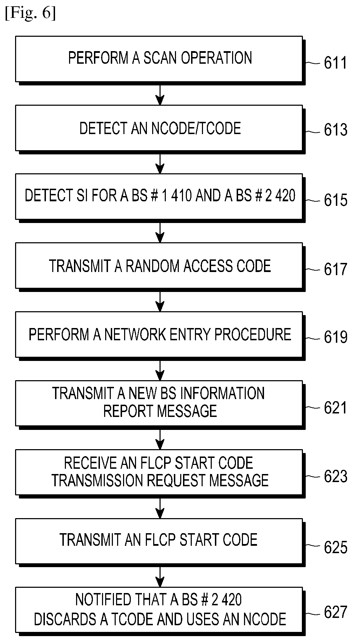

FIG. 6 schematically illustrates an operation process of an MS 430 illustrated in FIG. 5.

Referring to FIG. 6, the MS 430 performs a scan operation for neighbor BSs in step 611. The MS 430 detects an Ncode and a Tcode after performing the scan operation in step 613. The MS 430 detects SI for the BS # 1 410 which transmits the Ncode and SI for the BS # 2 420 which transmits the Tcode in step 615. The MS 430 transmits a random access code to the BS # 1 410 through a RACH in step 617. The MS 430 performs a network entry procedure with the BS # 1 410 in step 619.

The MS 430 transmits a new BS information report message to the BS # 1 410 in step 621. The MS 430 receives an FLCP start code transmission request message from the BS # 1 410 in step 623. The MS 430 transmits an FLCP start code to the BS # 2 420 in step 625. The MS 430 is notified that the BS # 2 420 discards the Tcode and uses the Ncode by the BS # 1 410 in step 627.

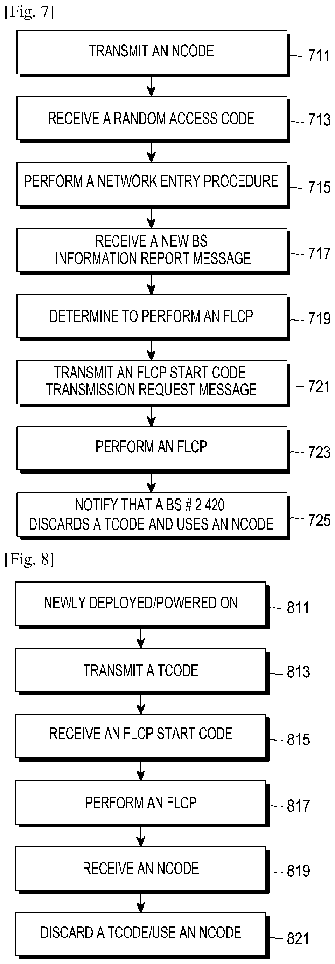

FIG. 7 schematically illustrates an operation process of a BS # 1 410 illustrated in FIG. 5.

Referring to FIG. 7, the BS # 1 410 transmits an Ncode in step 711 and receives a random access code from an MS 430 in step 713. The BS # 1 410 performs a network entry procedure with the MS 430 in step 715. The BS # 1 410 receives a new BS information report message from the MS 430 in step 717. The BS # 1 410 determines to perform an FLCP with a BS # 2 420 in step 719. The BS # 1 410 transmits an FLCP start code transmission request message to the MS 430 and MSs which are connected to the BS # 1 410 in step 721. The BS # 1 410 performs an FLCP with the BS # 2 420 during a preset time at a preset timing point in step 723. The BS # 1 410 notifies the MS 430 that the Tcode used in the BS # 2 420 is discarded and an Ncode is used to in step 725.

FIG. 8 schematically illustrates an operation process of a BS # 2 420 illustrated in FIG. 5.

Referring to FIG. 8, the BS # 2 420 is newly deployed and powered on in step 811 and transmits a Tcode in step 813. The BS # 2 420 receives an FLCP start code from an MS 430 in step 815. The BS # 2 420 performs an FLCP with a BS # 1 410 in step 817. The BS # 2 420 receives an Ncode from the BS # 1 410 through a wireless back haul link in step 819. The BS # 2 420 discards the Tcode and uses the Ncode in step 821.

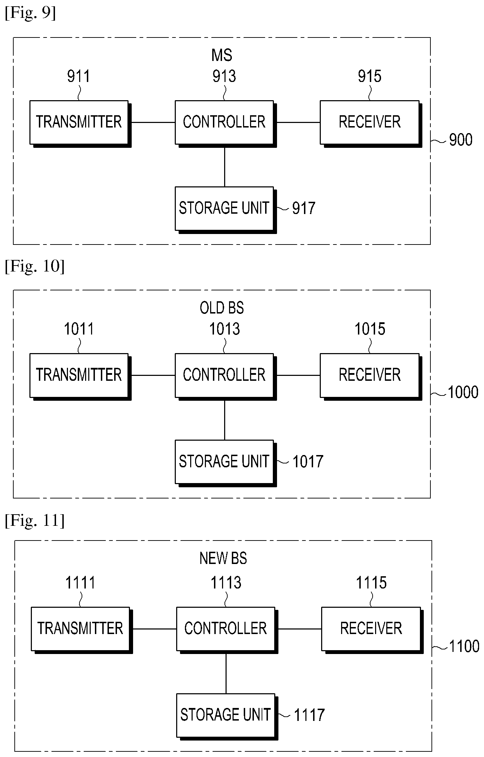

FIG. 9 schematically illustrates an internal structure of an MS in a wireless communication system according to embodiments of the present disclosure.

Referring to FIG. 9, an MS (900) includes a transmitter 911, a controller 913, a receiver 915, and a storage unit 917.

The controller 913 controls the overall operation of the MS 900. In particular, the controller 913 controls the MS 900 to perform an operation related to a wireless back haul link configuration operation between an old BS and a new BS. The operation related to the wireless back haul link configuration operation between the old BS and the new BS is performed in the manner described before with reference to FIGs. 4A to 6. The storage unit 917 stores a program and data related to the operation of the MS 900.

The transmitter 911 transmits signals and messages to the old BS and the new BS under a control of the controller 913. The transmitter 911 transmits the signals and the messages to the old BS and the new BS in the manner described before with reference to FIGs. 4a to 6.

The receiver 915 receives signals and messages from the old BS and the new BS under a control of the controller 913. The receiver 915 receives the signals and messages from the old BS and the new BS in the manner described before with reference to FIGs. 4a to 6.

While the transmitter 911, the controller 913, the receiver 915, and the storage unit 917 are shown in FIG. 9 as separate units for convenience of description. In other words, two or more of the transmitter 911, the controller 913, the receiver 915, and the storage unit 917 may be incorporated into a single unit.

FIG. 10 schematically illustrates an internal structure of an old BS in a wireless communication system according to embodiments of the present disclosure.

Referring to FIG. 10, an old BS (1000) includes a transmitter 1011, a controller 1013, a receiver 1015, and a storage unit 1017.

The controller 1013 controls the overall operation of the old BS 1000. In particular, the controller 1013 controls the old BS 1000 to perform an operation related to a wireless back haul link configuration operation between the old BS and a new BS. The operation related to the wireless back haul link configuration operation between the old BS and the new BS is performed in the manner described before with reference to FIGs. 4a to 4d, FIG. 5, and FIG. 7. The storage unit 1017 stores a program and data related to the operation of the old BS 1000.

The transmitter 1011 transmits signals and messages to an MS and the new BS under a control of the controller 1013. The transmitter 1011 transmits the signals and the messages to the MS and the new BS in the manner described before with reference to FIGs. 4a to 4d, FIG. 5, and FIG. 7.

The receiver 1015 receives signals and messages from the MS and the new BS under a control of the controller 1013. The receiver 1015 receives the signals and messages from the MS and the new BS in the manner described before with reference to FIGs. 4a to 4d, FIG. 5, and FIG. 7.

While the transmitter 1011, the controller 1013, the receiver 1015, and the storage unit 1017 are shown in FIG. 10 as separate units for convenience of description. In other words, two or more of the transmitter 1011, the controller 1013, the receiver 1015, and the storage unit 1017 may be incorporated into a single unit.

FIG. 11 schematically illustrates an internal structure of a new BS in a wireless communication system according to embodiments of the present disclosure.

Referring to FIG. 11, a new BS (1100) includes a transmitter 1111, a controller 1113, a receiver 1115, and a storage unit 1117.

The controller 1113 controls the overall operation of the new BS 1100. In particular, the controller 1113 controls the new BS 1100 to perform an operation related to a wireless back haul link configuration operation between an old BS and the new BS. The operation related to the wireless back haul link configuration operation between the old BS and the new BS is performed in the manner described before with reference to FIGs. 4a to 4d, FIG. 5, and FIG. 8. The storage unit 1117 stores a program and data related to the operation of the new BS 1100.

The transmitter 1111 transmits signals and messages to an MS and the old BS under a control of the controller 1113. The transmitter 1111 transmits the signals and the messages to the MS and the old BS in the manner described before with reference to FIGs. 4a to 4d, FIG. 5, and FIG. 8.

The receiver 1115 receives signals and messages from the MS and the old BS under a control of the controller 1113. The receiver 1115 receives the signals and messages from the MS and the old BS in the manner described before with reference to FIGs. 4a to 4d, FIG. 5, and FIG. 8.

While the transmitter 1111, the controller 1113, the receiver 1115, and the storage unit 1117 are shown in FIG. 11 as separate units for convenience of description. In other words, two or more of the transmitter 1111, the controller 1113, the receiver 1115, and the storage unit 1117 may be incorporated into a single unit.

Although the present disclosure has been described with certain embodiments, various changes and modifications may be suggested to one skilled in the art.

## Claims

1. A method by a mobile station, MS, for configuring a wireless back haul link between Base Stations, BSs, in a wireless communication system, the method comprising:
receiving (511) system information, SI, for each of a first BS being a BS already deployed which transmits a first code and a second BS being a BS newly deployed which transmits a second code;
transmitting (527), to the first BS, a message including the SI for the second BS;
after transmitting the message, receiving (531), from the first BS, a request message to transmit a third code to the second BS; and
in response to the request message, transmitting (533), to the second BS, the third code, the third code commanding the second BS to start performing a link configuration procedure with the first BS for configuring a wireless back haul link between the first BS and the second BS,
wherein the first code is a code transmitted from a BS which is already deployed, and
wherein the second code is a code transmitted from a BS which is newly deployed.

2. The method of claim 1, wherein the link configuration procedure comprises a procedure in which a reference symbol for a link is transmitted from the first BS to the second BS and the reference symbol is received at the first BS from the second BS.

3. The method of claim 1, further comprising:
detecting the first code and the second code by performing a scan operation for neighbor BSs.

4. The method of claim 1, further comprising:
performing a network entry procedure with the first BS.

5. The method of claim 1, wherein the SI of the message includes location associated information of the second BS.

6. The method of claim 1, wherein the first code is a normal code, Ncode, and the second code is a temporary code, Tcode.

7. A method by a first base station, BS, being already deployed, for configuring a wireless back haul link between Base Stations, BSs, in a wireless communication system, the method comprising:
transmitting (513) a first code;
receiving (527), from a mobile station, MS, a message including system information, SI, for a second BS being newly deployed which transmits a second code;
after receiving the message, transmitting (531), to the MS, a request message to transmit a third code to the second BS, the third code commanding the second BS to start performing a link configuration procedure with the first BS for configuring a wireless back haul link between the first BS and the second BS; and
performing (535) the link configuration procedure with the second BS,
wherein the first code is a code transmitted from a BS which is already deployed, and
wherein the second code is a code transmitted from a BS which is newly deployed.

8. The method of claim 7, wherein the link configuration procedure comprises a procedure in which a reference symbol for a link is transmitted from the first BS to the second BS and the reference symbol is received at the first BS from the second BS.

9. The method of claim 7, further comprising:
performing a network entry procedure with the MS.

10. The method of claim 7, wherein the SI of the message includes location associated information of the second BS.

11. The method of claim 7, wherein the first code is a normal code, Ncode, and the second code is a temporary code, Tcode.

12. A method by a second base station, BS, being newly deployed for configuring a wireless back haul link between Base Stations, BSs, in a wireless communication system, the method comprising:
transmitting (517) a second code;
receiving (533), from a mobile station, MS, a third code which commands the second BS to start performing a link configuration procedure with a first BS for configuring a wireless back haul link between the first BS and the second BS; and
performing (535) the link configuration procedure with the first BS which transmits a first code,
wherein the first code is a code transmitted from a BS which is already deployed, and
wherein the second code is a code transmitted from a BS which is newly deployed.

13. The method of claim 12, wherein the link configuration procedure comprises a procedure in which a reference symbol for a link is transmitted from the first BS to the second BS and the reference symbol is received at the first BS from the second BS.

14. The method of claim 12, wherein the first code is a normal code, Ncode, and the second code is a temporary code, Tcode.

15. A mobile station, MS, adapted to perform the method of one of claims 1 to 6.

16. A first base station, BS, adapted to perform the method of one of claims 7 to 11.

17. A second base station, BS, adapted to perform the method of one of claims 12 to 14.

## Patentansprüche

1. Verfahren einer Mobilstation, MS, zum Konfigurieren einer drahtlosen Backhaul-Verbindung zwischen Basisstationen, BS, in einem drahtlosen Kommunikationssystem, wobei das Verfahren Folgendes umfasst:
Empfangen (511) von Systeminformationen, SI, für jede einer ersten BS, die eine schon eingesetzte BS ist, die einen ersten Code überträgt, und einer zweiten BS, die eine neu eingesetzte BS ist, die einen zweiten Code überträgt;
Übertragen (527) einer Nachricht einschließlich der SI für die zweite BS an die erste BS;
nach dem Übertragen der Nachricht, Empfangen (531) einer Anforderungsnachricht von der ersten BS zum Übertragen eines dritten Codes an die zweite BS; und
als Antwort auf die Anforderungsnachricht, Übertragen (533) des dritten Codes an die zweite BS, wobei der dritter Code der zweiten BS befiehlt, die Ausführung eines Verbindungskonfigurationsverfahrens mit der ersten BS zum Konfigurieren einer drahtlosen Backhaul-Verbindung zwischen der ersten BS und der zweiten BS zu starten,
wobei der erste Code ein Code ist, der von einer BS übertragen wird, die schon eingesetzt wird, und
wobei der zweite Code ein Code ist, der von einer BS übertragen wird, die neu eingesetzt wird.

2. Betriebsverfahren nach Anspruch 1, wobei das Verbindungskonfigurationsverfahren ein Verfahren umfasst, bei dem ein Referenzsymbol für eine Verbindung von der ersten BS an die zweite BS übertragen wird und das Referenzsymbol an der ersten BS von der zweiten BS empfangen wird.

3. Verfahren nach Anspruch 1, welches ferner umfasst:
Erkennen des ersten Codes und des zweiten Codes durch das Ausführen eines Scan-Vorgangs für benachbarte BS.

4. Verfahren nach Anspruch 1, welches ferner umfasst:
Ausführen eines Netzwerkeingabeverfahrens mit der ersten BS.

5. Verfahren nach Anspruch 1, wobei die SI der Nachricht standortbezogene Informationen der zweiten BS beinhalten.

6. Verfahren nach Anspruch 1, wobei der erste Code ein normaler Code, Ncode, und der zweite Code ein zeitweiliger Code, Tcode, ist.

7. Verfahren durch eine erste Basisstation, BS, die schon eingesetzt wird, zum Konfigurieren einer drahtlosen Backhaul-Verbindung zwischen Basisstationen, BS, in einem drahtlosen Kommunikationssystem, wobei das Verfahren Folgendes umfasst:
Übertragen (513) eines ersten Codes;
Empfangen (527) einer Nachricht, die Systeminformationen, SI, enthält, von einer Mobilstation, MS, für eine zweite BS, die neu eingesetzt wird und einen zweiten Code überträgt;
nach dem Empfangen der Nachricht, Übertragen (531) einer Anforderungsnachricht an die MS zum Übertragen eines dritten Codes an die zweite BS, wobei der dritte Code der zweiten BS befiehlt, die Ausführung eines Verbindungskonfigurationsverfahrens mit der ersten BS zum Konfigurieren einer drahtlosen Backhaul-Verbindung zwischen der ersten BS und der zweiten BS zu starten; und
Ausführen (535) des Verbindungskonfigurationsverfahrens mit der zweiten BS,
wobei der erste Code ein Code ist, der von einer BS übertragen wird, die schon eingesetzt wird, und
wobei der zweite Code ein Code ist, der von einer BS übertragen wird, die neu eingesetzt wird.

8. Verfahren nach Anspruch 7, wobei das Verbindungskonfigurationsverfahren ein Verfahren umfasst, bei dem ein Referenzsymbol für eine Verbindung von der ersten BS an die zweite BS übertragen wird und das Referenzsymbol an der ersten BS von der zweiten BS empfangen wird.

9. Verfahren nach Anspruch 7, welches ferner umfasst:
Ausführen eines Netzwerkeingabeverfahrens mit der MS.

10. Verfahren nach Anspruch 7, wobei die SI der Nachricht standortbezogene Informationen der zweiten BS beinhalten.

11. Verfahren nach Anspruch 7, wobei der erste Code ein normaler Code, Ncode, und der zweite Code ein zeitweiliger Code, Tcode, ist.

12. Verfahren einer zweiten Basisstation, BS, die neu eingesetzt wird, zum Konfigurieren einer drahtlosen Backhaul-Verbindung zwischen Basisstationen, BS, in einem drahtlosen Kommunikationssystem, wobei das Verfahren Folgendes umfasst:
Übertragen (517) eines zweiten Codes;
Empfangen (533) eines dritten Codes von einer Mobilstation, MS, der der zweiten BS befiehlt, die Ausführung eines Verbindungskonfigurationsverfahrens mit einer ersten BS zum Konfigurieren einer drahtlosen Backhaul-Verbindung zwischen der ersten BS und der zweiten BS zu starten; und
Ausführen (535) des Verbindungskonfigurationsverfahrens mit der ersten BS, die einen ersten Code überträgt,
wobei der erste Code ein Code ist, der von einer BS übertragen wird, die schon eingesetzt wird, und
wobei der zweite Code ein Code ist, der von einer BS übertragen wird, die neu eingesetzt wird.

13. Verfahren nach Anspruch 12, wobei das Verbindungskonfigurationsverfahren ein Verfahren umfasst, bei dem ein Referenzsymbol für eine Verbindung von der ersten BS an die zweite BS übertragen wird und das Referenzsymbol an der ersten BS von der zweiten BS empfangen wird.

14. Verfahren nach Anspruch 12, wobei der erste Code ein normaler Code, Ncode, und der zweite Code ein zeitweiliger Code, Tcode, ist.

15. Eine Mobilstation, MS, die angepasst ist, um das Betriebsverfahren einer der Ansprüche 1 bis 6 auszuführen.

16. Erste Basisstation, BS, die angepasst ist, um das Betriebsverfahren einer der Ansprüche 7 bis 11 auszuführen.

17. Eine zweite Basisstation, BS, die angepasst ist, um das Betriebsverfahren einer der Ansprüche 12 bis 14 auszuführen.

## Revendications

1. Procédé par une station mobile, MS, pour configurer une liaison terrestre sans fil entre des stations de base, BS, dans un système de communication sans fil, le procédé comprenant :
recevoir (511) des informations de système, SI, pour chacune d'une première BS étant une BS déjà déployée qui transmet un premier code et une deuxième BS étant une BS récemment déployée qui transmet un deuxième code ;
transmettre (527), à la première BS, un message incluant les SI pour la deuxième BS ;
après avoir transmis le message, recevoir (531), à partir de la première BS, un message de demande pour transmettre un troisième code à la deuxième BS ; et
en réponse au message de demande, transmettre (533), à la deuxième BS, le troisième code, le troisième code commandant à la deuxième BS de commencer à effectuer une procédure de configuration de liaison avec la première BS afin de configurer une liaison terrestre sans fil entre la première BS et la deuxième BS,
où le premier code est un code transmis à partir d'une BS qui est déjà déployée, et
où le deuxième code est un code transmis à partir d'une BS qui est récemment déployée.

2. Procédé de fonctionnement selon la revendication 1, où la procédure de configuration de liaison comprend une procédure où un symbole de référence pour une liaison est transmis à partir de la première BS à la deuxième BS et le symbole de référence est reçu par la première BS en provenance de la deuxième BS.

3. Procédé selon la revendication 1, comprenant en outre :
détecter le premier code et le deuxième code en effectuant une opération de balayage pour des BS voisines.

4. Procédé selon la revendication 1, comprenant en outre :
effectuer une procédure d'entrée de réseau avec la première BS.

5. Procédé selon la revendication 1, où les SI du message comprennent des informations de localisation associées de la deuxième BS.

6. Procédé selon la revendication 1, où le premier code est un code normal, Ncode, et le deuxième code est un code temporaire, Tcode.

7. Procédé par une première station de base, BS, étant déjà déployée, pour configurer une liaison terrestre sans fil entre des stations de base, BS, dans un système de communication sans fil, le procédé comprenant :
transmettre (513) un premier code;
recevoir (527), à partir d'une station mobile, MS, un message incluant des informations de système, SI, pour une deuxième BS étant récemment déployée qui transmet un deuxième code ;
après avoir reçu le message, transmettre (531), à la MS, un message de demande pour transmettre un troisième code à la deuxième BS, le troisième code commandant à la deuxième BS de commencer à effectuer une procédure de configuration de liaison avec la première BS afin de configurer une liaison terrestre sans fil entre la première BS et la deuxième BS ; et
effectuer (535) la procédure de configuration de liaison avec la deuxième BS,
où le premier code est un code transmis à partir d'une BS qui est déjà déployée, et
où le deuxième code est un code transmis à partir d'une BS qui est récemment déployée.

8. Procédé selon la revendication 7, où la procédure de configuration de liaison comprend une procédure où un symbole de référence pour une liaison est transmis à partir de la première BS à la deuxième BS et le symbole de référence est reçu par la première BS en provenance de la deuxième BS.

9. Procédé selon la revendication 7, comprenant en outre :
effectuer une procédure d'entrée de réseau avec la MS.

10. Procédé selon la revendication 7, où les SI du message comprennent des informations associées à la localisation de la deuxième BS.

11. Procédé selon la revendication 7, où le premier code est un code normal, Ncode, et le deuxième code est un code temporaire, Tcode.

12. Procédé par une deuxième station de base, BS, étant récemment déployée pour configurer une liaison terrestre sans fil entre des stations de base, BS, dans un système de communication sans fil, le procédé comprenant :
transmettre (517) un deuxième code;
recevoir (533), à partir d'une station mobile, MS, un troisième code commandant à la deuxième BS de commencer à effectuer une procédure de configuration de liaison avec une première BS afin de configurer une liaison terrestre sans fil entre la première BS et la deuxième BS ; et
effectuer (535) la procédure de configuration de liaison avec la première BS qui transmet un premier code,
où le premier code est un code transmis à partir d'une BS qui est déjà déployée, et
où le deuxième code est un code transmis à partir d'une BS qui est récemment déployée.

13. Procédé selon la revendication 12, où la procédure de configuration de liaison comprend une procédure où un symbole de référence pour une liaison est transmis à partir de la première BS à la deuxième BS et le symbole de référence est reçu par la première BS en provenance de la deuxième BS.

14. Procédé selon la revendication 12, où le premier code est un code normal, Ncode, et le deuxième code est un code temporaire, Tcode.

15. Station mobile, MS, adaptée pour mettre en œuvre le procédé de fonctionnement de l'une des revendications 1 à 6.

16. Première station de base, BS, adaptée pour mettre en œuvre le procédé de fonctionnement de l'une des revendications 7 à 11.

17. Deuxième station de base, BS, adaptée pour mettre en œuvre le procédé de fonctionnement de l'une des revendications 12 à 14.
